Europäisches Patentamt

European Patent Office

Office européen des brevets

(11) Veröffentlichungsnummer: **0 460 292 A1**

# (12) EUROPÄISCHE PATENTANMELDUNG

(21) Anmeldenummer: **90124352.7**

(22) Anmeldetag: **15.12.90**

(51) Int. Cl.5: **F16D 1/06,** F16D 1/02,
F16D 1/08, F16D 1/04,
F16H 55/44, F16H 57/02,
F04D 29/26

(30) Priorität: **02.06.90 DE 4017913**

(43) Veröffentlichungstag der Anmeldung:
**11.12.91 Patentblatt 91/50**

(84) Benannte Vertragsstaaten:
**DE FR GB IT SE**

(71) Anmelder: **Firma Carl Freudenberg
Höhnerweg 2-4
W-6940 Weinheim/Bergstrasse(DE)**

(72) Erfinder: **Andrä, Rainer-Horst, Dr.
Dehrner Strasse 10
W-6250 Limburg 5(DE)**
Erfinder: **Ullrich, Günter
Hagenstrasse 22
W-6944 Hemsbach(DE)**

(54) **Rotationskörper.**

(57) Ein Rotationskörper aus einem tiefgezogenen
Blechteil und einem damit verbundenen, auf einer
Welle festlegbaren, hohlzylindrischen Nabenteil. Der
Blechteil (1) und der Nabenteil (2) sind einstückig
ineinander übergehend durch Tiefziehen erzeugt,
wobei eine metallische Schrumpfhülse (3) auf dem
Außenumfang des Nabenteils (2) durch Aufschrumpfen unverrückbar festgelegt ist.

Die Erfindung betrifft einen Rotationskörper aus einem tiefgezogenen Blechteil und einem damit verbundenen, auf einer Welle festlegbaren, hohlzylindrischen Nabenteil.

Ein solcher Rotationskörper ist bekannt. Der Blechteil und der Nabenteil sind dabei durch eine gegenseitige Verschweißung oder Verschraubung verbunden, was im Hinblick auf die Vermeidung einer verkanteten oder in radialer Richtung relativ verlagerten, gegenseitigen Zuordnung die Anwendung spezieller Vorkehrungen während der Vereinigung erforderlich macht. Unter technischen und wirtschaftlichen Gesichtspunkten ist das wenig befriedigend.

Der Erfindung liegt die Aufgabe zugrunde, einen solchen Rotationskörper derart weiterzuentwikkeln, daß eine rotationssymmetrische und unverkantete Zuordnung des Nabenteils zu dem Blechteil bei vereinfachter Herstellbarkeit gewährleistet ist.

Diese Aufgabe wird erfindungsgemäß bei einem Rotationskörper der eingangs genannten Art dadurch gelöst, daß der Blechteil und der Nabenteil einstückig ineinander übergehend durch Tiefziehen erzeugt sind und daß eine metallische Schrumpfhülse auf dem Außenumfang des Nabenteils durch Aufschrumpfen unverrückbar festgelegt ist. Die Schrumpfhülse wird unabhängig von dem Blechteil erzeugt, beispielsweise durch Ablängen eines Stangenmaterials auf einem Drehautomaten. Sie ist von rotationssymmetrischer Gestalt und so dimensioniert, daß eine durch das Tiefziehen verursachte, eventuell vorhandene Unrundheit des Nabenteils nach dem Aufschrumpfen der Schrumpfhülse nicht mehr erkennbar ist. Bei Verwendung artverwandter Werkstoffe für die Herstellung der Schrumpfhülse und des Blechteils ist es hierzu erforderlich, der Schrumpfhülse eine Wandstärke zu geben, die diejenige des Blechteils um wenigstens das zweifache, vorteilhaft um wenigstens das dreifache übertrifft. Die Schrumpfhülse soll zumindest an dem dem Blechteil in axialer Richtung zugewandten Ende innenseitig mit einer Abrundung oder Anschrägung versehen sein, um eine axial bündige Anlage an dem sich in radialer Richtung erstreckenden Schenkel des Profils des Blechteils zu gewährleisten. Es ist dadurch entbehrlich, die Übergangszone zwischen den sich in radialer und den sich in axialer Richtung erstreckenden Schenkeln des Profils des Blechteils scharfkantig zu gestalten, was unter Festigkeitsgesichtspunkten von Vorteil ist.

Durch die unmittelbare Anlage der axialen Begrenzungsfläche der Schrumpfhülse an dem sich in radialer Richtung erstreckenden Schenkel des Profils des Blechteils besteht die Möglichkeit, dem Schenkel in dem der Schrumpfhülse axial gegenüberliegenden Bereich ein Spannmittel in Gestalt einer Schraube zuzuordnen und auf diese Weise eine besonders einfache, unverdrehbare Zuordnung des Blechteils zu einem anzuschließenden Maschinenteil zu gewährleisten, beispielsweise einer umlaufenden Welle. Zweckmäßigerweise ist diese mit einem umlaufenden Bund versehen, an dem sich die Stützhülse mit ihrer von dem Blechteil abgewandten Stirnfläche beim Anziehen der Schraube abzustützen vermag.

Die Erzielung einer konzentrischen, unverkanteten Zuordnung des Blechteils zu dem umlaufenden Maschinenteil wird hierdurch weiter begünstigt.

Der Nabenteil kann an dem von dem Blechteil in axialer Richtung abgewandten Ende mit zumindest einem in eine Ausnehmung der Schrumpfhülse eingreifenden, seinen Außenumfang in radialer Richtung überragenden Vorsprung versehen sein, um eine zusätzliche Sicherheit gegen eine unbeabsichtigte Auflösung der Verbindung zwischen dem Nabenteil und der Schrumpfhülse zu erhalten. Der Vorsprung wird zweckmäßigerweise im Anschluß an das Aufschrumpfen der Schrumpfhülse auf den Nabenteil durch eine plastische Deformierung des über die Schrumpfhülse überstehenden, axialen Endes erzeugt. Er ist zweckmäßigerweise ebenso wie die Ausnehmung rotationssymmetrisch gestaltet.

Die Festlegung der Schrumpfhülse auf dem Nabenteil wird bei dem erfindungsgemäßen Rotationskörper dadurch bewirkt, daß entweder die Schrumpfhülse vor dem Aufbringen auf den Nabenteil durch eine Erwärmung in ausreichendem Maße hinsichtlich ihres Innendurchmessers aufgeweitet wird oder daß das Nabenteil durch eine vorausgehende Abkühlung hinsichtlich seines Außendurchmessers so weit verringert wird, daß eine problemlose Vereinigung möglich ist. Im Anschluß hieran werden die Temperaturen der beiden Teile aneinander angeglichen, was eine gegenseitige Verpressung in radialer Richtung bedingt und eine unverrückbare Festlegung aneinander.

Die Schrumpfhülse muß aus einem formbeständigen Werkstoff ausreichender Zugfestigkeit bestehen. Bevorzugt gelangen zu ihrer Herstellung metallische Werkstoffe zur Anwendung, beispielsweise gehärteter Stahl. Es besteht dann die Möglichkeit, die Schrumpfhülse während der bestimmungsgemäßen Verwendung in Eingriff mit einem sekundären Dichtungsmittel zu bringen, beispielsweise einem Radialwellendichtring, und sie auf diese Weise sekundären Zwecken zuzuführen.

Der erfindungsgemäße Rotationskörper zeichnet sich durch eine besonders gute Reproduzierbarkeit aus. Er läßt sich kostengünstig und mit großer Präzision erzeugen, was für die Herstellung von Massenteilen von großem Vorteil ist.

Zur Anwendung gelangen kann der erfindungsgemäße Rotationskörper auf vielfältigen Gebieten des Maschinenbaus. Bevorzugte Anwendungsgebiete beziehen sich auf die Verwendung als Nabenring innerhalb von Torsionsschwingungsdämpfern sowie in bezug auf die Herstellung von Riemenscheiben, welche insbesondere auf dem Gebiet der Kfz-Technik zur Anwendung gelangen können. In beiden Fällen ergibt sich hierbei der zusätzliche Vorteil, daß, bezogen auf das Gesamtgewicht, eine optimale Festigkeit erhalten wird.

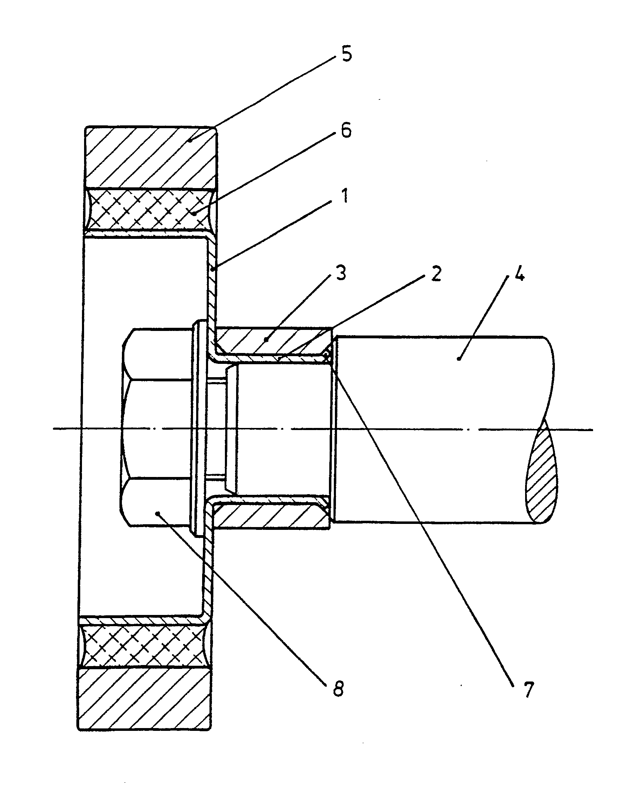

Die Erfindung wird nachfolgend anhand der beigefügten Zeichnung weiter verdeutlicht.

Die Zeichnung zeigt den Rotationskörper in einer Verwendung als Nabenring eines Torsionsschwingungsdämpfers. Dieser besteht im wesentlichen aus einem Trägheitsring 5, welcher mittels einer anvulkanisierten Zwischenschicht 6 aus Gummi auf dem Außenumfang des Nabenringes festgelegt ist. Der Nabenring ist von topfförmiger Gestalt und einstückig mit dem Nabenteil 2 durch Tiefziehen erzeugt. Auf den Außenumfang des Nabenteils 2 ist ein Schrumpfring 3 aus Stahl durch Aufschrumpfen unverrückbar festgelegt. Der Außendurchmesser des hohlzylindrischen Nabenteils 2 und der Innendurchmesser der Schrumpfhülse 3 sind herstellungsbedingt derart aufeinander abgestimmt, daß sich nach dem Aufschrumpfen der Schrumpfhülse 3 auf den Nabenteil 2 eine unverrückbare, gegenseitige Festlegung aneinander ergibt.

Die Schrumpfhülse ist an beiden axialen Enden innenseitig mit einer Anschrägung ihres Profils versehen. Sie stützt sich dadurch nach dem Auffügen auf den Nabenteil 2 mit der einen Stirnfläche unmittelbar an dem sich in radialer Richtung erstreckenden Schenkel des Profils des Blechteils ab, während die andere Stirnfläche während der bestimmungsgemäßen Verwendung in Eingriff mit einem in radialer Richtung vorstehenden Bund eines anzuschließenden Maschinenteiles in Eingriff gebracht werden kann, welches im vorliegenden Fall durch eine Welle 7 gebildet ist. Nach dem Eindrehen der Klemmschraube 8 in die aufnehmende Bohrung des Maschinenteils ergibt sich hierdurch eine axiale Umklammerung des in radialer Richtung vorstehenden Schenkels des Profils des Blechteils 1, was dessen unverdrehbare Festlegung an den Maschinenteil begünstigt und zusätzlich eine unverkantete, rotationssymmetrische Zuordnung zu diesem bedingt.

Das Nabenteil ist an dem von dem Blechteil 1 abgewandten Ende mit einem rotationssymmetrischen Vorsprung 4 versehen, der den Außendurchmesser des Nabenteils in radialer Richtung überragt und sich in Eingriff mit der Ausnehmung der Schrumpfhülse befindet. Die Befestigung der Schrumpfhülse 3 an dem Blechteil 1 erfährt hierdurch eine zusätzliche Sicherung. Bedingt durch das resultierende, hohlzylindrische Ende des Nabenteils resultiert darüber hinaus eine vereinfachte Montagemöglichkeit auf dem Zapfen der Welle 7.

**Patentansprüche**

1. Rotationskörper aus einem tiefgezogenen Blechteil und einem damit verbundenen, auf einer Welle festlegbaren, hohlzylindrischen Nabenteil, dadurch gekennzeichnet, daß der Blechteil (1) und der Nabenteil (2) einstückig ineinander übergehend durch Tiefziehen erzeugt sind und daß eine metallische Schrumpfhülse (3) auf dem Außenumfang des Nabenteils (2) durch Aufschrumpfen unverrückbar festgelegt ist.

2. Rotationskörper nach Anspruch 1, dadurch gekennzeichnet, daß der Nabenteil (2) an dem von dem Blechteil (1) in axialer Richtung abgewandten Ende mit zumindest einem in einer Ausnehmung der Schrumpfhülse (3) eingreifenden, seinen Außenumfang in radialer Richtung überragenden Vorsprung (4) versehen ist.

3. Rotationskörper nach Anspruch 2, dadurch gekennzeichnet, daß die Ausnehmung und der Vorsprung (4) rotationssymmetrisch ausgebildet sind.

4. Rotationskörper nach Anspruch 1 bis 3, dadurch gekennzeichnet, daß die Schrumpfhülse (3) aus gehärtetem Stahl besteht.

5. Rotationskörper nach Anspruch 1 bis 4, gekennzeichnet durch eine Verwendung als Nabenring eines Torsionsschwingungsdämpfers.

6. Rotationskörper nach Anspruch 1 bis 4, gekennzeichnet durch eine Verwendung als Riemenscheibe.

**Europäisches Patentamt**

# EUROPÄISCHER RECHERCHENBERICHT

Nummer der Anmeldung

## EP 90 12 4352

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 556 286 (GLAENZER SPICER) <br> * das ganze Dokument * <br> – – – | 1-4 | F 16 D 1/06 <br> F 16 D 1/02 <br> F 16 D 1/08 |
| X,Y | EP-A-0 330 930 (EMITEC) <br> * das ganze Dokument * <br> – – – | 1,2,3,6 | F 16 D 1/04 <br> F 16 H 55/44 <br> F 16 H 57/02 |
| Y,A | US-A-4 807 351 (BERG) <br> * das ganze Dokument * <br> – – – | 2,3,1 | F 04 D 29/26 |
| Y,A | EP-A-0 048 314 (WINKELMANN & PANNHOFF) <br> * das ganze Dokument * <br> – – – | 6,1 | |
| A | US-A-3 596 943 (KRAUSS) <br> – – – | | |
| A | FR-A-1 232 031 (GELENKWELLENBAU) <br> – – – | | |
| A | DE-C-7 396 03 (PINTSCH) <br> – – – – – | | |

|  |
|---|
| **RECHERCHIERTE SACHGEBIETE (Int. Cl.5)** |
| F 16 D <br> F 16 H <br> F 04 D |

Der vorliegende Recherchenbericht wurde für alle Patentansprüche erstellt

| Recherchenort | Abschlußdatum der Recherche | Prüfer |
|---|---|---|
| Den Haag | 19 September 91 | BALDWIN D.R. |